# EUROPÄISCHE PATENTSCHRIFT

(11) **EP 0 780 184 B1**
(45) Veröffentlichungstag und Bekanntmachung des Hinweises auf die Patenterteilung: **24.01.2001**
(21) Anmeldenummer: 95120221.7
(22) Anmeldetag: 20.12.1995
(51) Int. Cl.: B23K 7/10

(54) **Quer- und Längsteileinrichtung zum Sauerstoffbrennschneiden von heissen und kalten Strängen**
Device for longitudinal and transversely dividing cold or hot steel slaps
Dispositif pour couper longitudinalement et transversalement des brames d'acier chaudes ou froides

(43) Veröffentlichungstag der Anmeldung: 25.06.1997
(73) Patentinhaber: Aute AG Gesellschaft für autogene Technik, 2068 Hauterive (CH)
(72) Erfinder: Lotz, Horst Karl, D-65719 Hofheim-Wallau (DE); Deica, Alexander, D-65510 Hünstetten-Wallbach (DE); Buhr, Wigbert, D-56593 Hohrhausen (DE)

(56) Entgegenhaltungen:
- EP-A- 0 068 165
- EP-A- 0 097 883
- EP-A- 0 532 789
- US-A- 2 521 199
- US-A- 4 821 963

## Beschreibung

Das wirtschaftliche und schnelle Brennschneiden von Stahl verschiedener Dicken mit Sauerstoff ist seit über 60 Jahren eine unverändert wichtige, ja durch die Bedeutung des Stahlstranggießens noch wichtiger gewordene Entwicklungsaufgabe in Forschung und Praxis. In seiner Patentschrift US-A-2.521.199, die als nächstliegender Stand der Technik angesehen wird, erläutert Roger S. Babcock seine Feststellungen und Vorschläge zum witschaftlichen Schnellschneiden mit hohen Drücken von 450 PSI (31,7 bar) bis 600 PSI (35,2 bar) und divergenten Düsen. Viele dieser Feststellungen sind nach wie vor gültig, und doch hat sich das Schneiden mit Hochdrucksauerstoff in Bereichen, in denen man heute mit etwa 15 bar Düseneingangsdruck = Arbeitsdruck arbeitet, nicht durchgesetzt, wenngleich es wegen der möglichen Vorteile eine ganze Reihe von Entwicklungen und Einsatzversuchen gab. Ein geordneter, auf Dauer zuverlässiger Betrieb mit gasförmigem Hochdrucksauerstoff von 15 bis über 100 bar Arbeitsdruck schien nicht möglich.

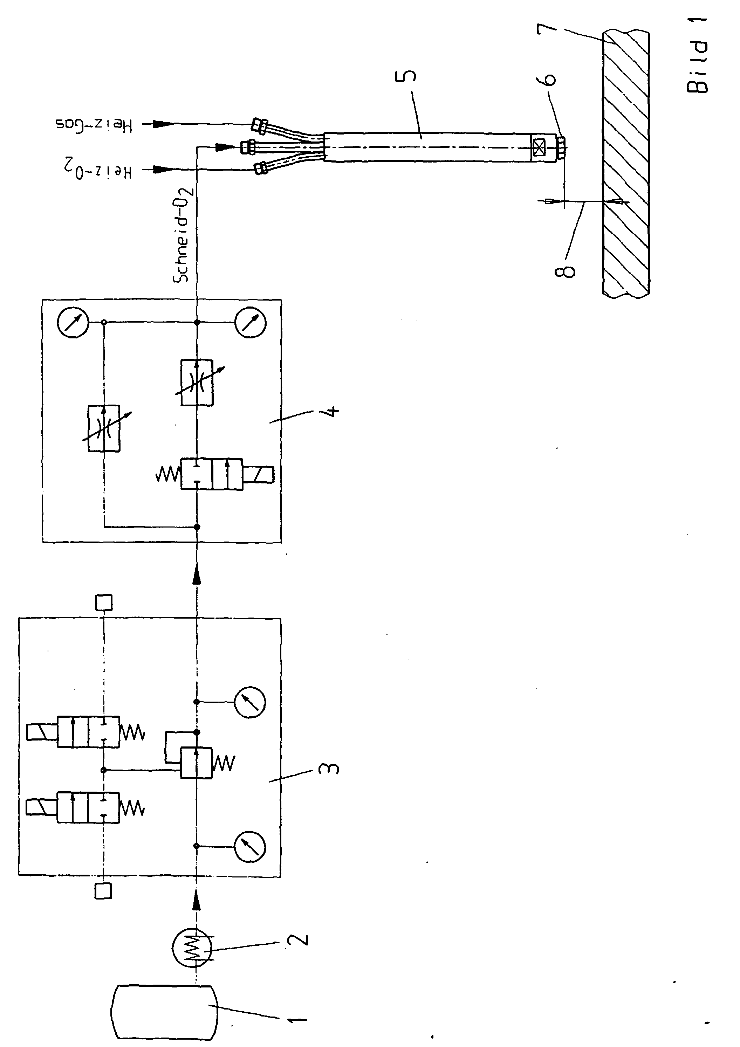

Wenngleich die Austrittsdrücke und die Strahlgeschwindigkeiten beim Hochdrucksauerstoff-Brennschneiden bekannt und beeinflußbar waren, wurden betriebliche Einflüsse und Umstände nicht berücksichtigt, wie auch schon von Roger S.
Babcock in Bild 1 seiner oben angeführten Patentschrift erkennbar mangelhaft dargestellt. Eine Druck- und Mengensteuerung des Schneidsauerstoffs durch eine Flüssigsauerstoffpumpe vor einem Verdampfer mit einem auch für die Druckmessung genutzten Behälter danach, wobei ein Druckschalter den Pumpenmotor ein- und ausschaltet, war unbedingt ungenügend. Sonst gab es nur ein Absperrventil zum An- und Abschalten des Schneidsauerstoffs. Unter Versuchsbedingungen und/oder nur kurzzeitig waren mit diesem so dargestellten Versorgungs- und Leitungssystem sowie auch seiner sehr allgemeinen Definition der Düsenabmessungen durchaus gute Schneidergebnisse möglich, nicht aber auf Dauer in der praktischen Anwendung.
Das gilt auch für alle bekannten Anlagen zum Hochdrucksauerstoff-Brennschneiden, abgesehen vom Brennschneiden mit Flüssigsauerstoff, wo geringfügige Druckschwankungen weniger von Einfluß sind.

Aufgabe der Erfindung ist es daher, eine Stahlstranggießanlage zu schaffen, die die genannten Nachteile vermeidet.

Diese Aufgabe wird gemäß der Erfindung durch eine Stahlstranggießanlage gemäß Anspruch 1 gelöst.

Die Erfindung wird im folgenden anhand der Figuren näher erläutert. Es zeigen:

Bild 1: Ein Hochdrucksauerstoff-trennsystem.

Bild 2: Eine verbesserte Standard-Trenndüse.

Bild 3: Eine Trenndüse der erfindungsgemäßen Stahlstranggießanlage.

Bild 4: Ein Sauerstoff-Regelventil.

Bild 5: Ein Massenstromventil.

Die nachfolgend beschriebene Erfindung beruht auf der Erkenntnis, daß im Gegensatz zum üblichen Brennschneiden mit Sauerstoff unter etwa 15 bar mit mehr oder weniger geringen Einflüssen durch Druckveränderungen, bei höheren Drücken, größeren Mengen und damit höheren Sauerstoffgeschwindigkeiten, kleine und lange Querschnitte im Leitungssystem und vor allem in der Düse hohe Druckverluste und kleinste Veränderungen in Druck,Temperatur und Menge große Abweichungen der zum sicheren, guten und schnellen Schneiden notwendigen Strahlenergie bedeuten, insbesondere dann, wenn die Düsenauslegung und -fertigung zu ungenau oder für einen zu großen Arbeitsbereich erfolgt ist und man einen vorteilhaften Arbeitszustand vielleicht nur in einem zufällig eingestellten Grenzbereich trifft. So waren beispielsweise bei den diese Erfindung bestätigenden Versuchen Schneidergebnisse nicht wiederholbar, wenn geringste Abweichungen zur Prüfung in Kauf genommen wurden.

Aus dieser ersten Erkenntnis wurde gefolgert, daß beim Einsatz höherer Drücke des Schneidsauerstoffes zum Erzielen guter Schneidergebnisse dessen für jeden Anwendungsfall mit bestimmtem, sicher verfügbarem Arbeitsdruck in engster Drucktoleranz bei zuverlässig hoher Schneidgeschwindigkeit, guter Schnittqualität und geringer Schnittfugenbreite auf größere Herstellungsserien von Düsen einer bestimmten Art für einen größeren Druckbereich verzichtet werden muß und statt z.B. mit +/- 0,1 bar , eine besondere Schneiddüse berechnet, konstruiert, durch Versuche verfeinert und genauestens gefertigt werden muß. Die Verfeinerung durch Versuche ist vor allem zur Anpassung einer bestmöglichen Heizung zu dem jeweiligen Schneidkanal (10) mit seinem Schneidsauerstoff-Trennstrahl bei bestimmtem Druck und für die verschiedenen Heizgase erforderlich. Sie erhöht damit die Anzahl der notwendigen Ausführungen an Schneidüsen, um in jedem Einzelfall sicher, schnell und gut mit Hochdrucksauerstoff zu trennen. Nur so ist durch den höheren Druck verfügbare Energie in hohem Maß wirkungsvoll in Strahlgeschwindigkeit zum besseren Ausblasen der Brennschlacke aus der Trennfuge und damit zur Erhöhung der Schneidgeschwindigkeit umzusetzen. Eine gute Heizung unterstützt dieses durch bes-sere Verflüssigung der Brennschlacke.

Eine weitere zweite Erkenntnis zwang aus Sicherheits- und Kostengründen zur Einschränkung auf vorläufig nur kleinen Druckbereich für den Hochdrucksauerstoff, nämlich daß die Verfügbarkeit von Hochdrucksauerstoff von gleich/höher 20 bar in betriebswirtschaftlich ausreichenden Mengen normalerweise in Stahlwerken nicht gegeben ist. Aus Sicherheits-, Kosten- und Beschaffungsgründen führen die üblichen Werksnetze nur Sauerstoff von 10 bar (Japan) bis maximal 25 bar (Europa und andere) Leitungsdruck, welcher zudem noch durch zeitweilig starke Abnahmen anderer Verbraucher, z.B. beim Sauerstoffblasen bei der Stahlgewinnung starken Druckschwankungen unterworfen ist. Der Einsatz von zusätzlichen Hochdruckpumpen mit Pufferbehältern und allen notwendigen Sicherheitsgeräten war und ist sehr umständlich und teuer, und durch die Schwierigkeiten mit für größere Druckbereiche ausgelegte und noch schlecht versorgte Hochdrucksauerstoff-Trenndüsen sowieso unsinning.

Im Gegensatz dazu ist nun die wirtschaftliche Versorgung mit Hochdrucksauerstoff von um 20 bis um 35 bar für die Brennschneidanlagen gegeben, wenn man mit flüssigem Sauerstoff nachfüllbare Tanks (1) mit Verdampfern (2) von Sauerstofferzeugern mietet, und sie mittels Stich- oder Ringleitung mit den Brennschneidanlagen verbindet. Zwar ist die Größe der Tanks (1) und ihre Leistung beschränkt, aber ausreichend, um je nach Einschaltdauer der Schneidbrenner (5) mehrere davon zu versorgen. Zum Beispiel stellt ein entsprechender, handelsüblicher Tank (1) mit Verdampfer (2) etwa 400 Nm³/h Sauerstoff bei 37 bar zur Verfügung, eine für einen daraus folgenden, bestimmten Arbeitsdruck entwickelte Trenndüse (6) benötigt 90 bis 120 Nm³ pro Stunde bei 100% Einschaltdauer.
Die nur in wenigen Fällen verfügbare und dazu oft mit Druckschwankungen behaftete Versorgung aus einem Werksnetz mit 20 bis 25 bar ist für ein Brennschneiden mit diesem "Mitteldruck" nur in Grenzfällen sinnvoll, wenn die Versorgung gleichmäßiger gestaltet werden kann und bereits eine bescheidenere Verbesserung bisher üblicher Schneidgeschwindigkeiten schon den notwendigen Aufwand rechtfertigt.
Das gilt auch für den Einsatz von Sauerstoffverdichtern zur Netzdruckerhöhung.
Aber in beiden Fällen muß der genauesten Druck- und Mengenregelung gerade zum Betrieb der druckschwankungsempfindlichen Hochdrucksauerstoff-Trenndüsen (6) besondere Bedeutung zukommen. Dabei sind die Druckverluste von diesen Tanks (1) oder von diesen Pufferbehältern zur Verbrauchsstelle in den Anlagen verschieden groß und bedingen eine besondere Auslegung der Trenndüse (6) je nach verfügbarem dynamischen Arbeitsdruck.

Wie in Bild 1 dargestellt, besteht das Hochdrucksauerstoff-Trennsystem nach einem mit flüssigem Sauerstoff gefüllten Tank (1) mit Verdampfer (2) aus:
1) einem genau einstellbaren, genau den eingestellten Druck einhaltenden Sauerstoff Regelventil (3), um den Versorgungsdruck von beispielsweise ca. 37 bar oder ähnlich auf einen genauen Arbeitsdruck an der Trenndüse (6) von beispielsweise 26,2 bar, für den diese ausgelegt und gefertigt ist, zu bringen.
2) einem genau eingestellten Massenstromventil (4) gemäß EP-A-0 532 789 zur Vermeidung oder Verringerung von Rückwirkungen von der Trenndüse (6) her durch Verschleiß, Verspritzen mit Brennschlacke, Veränderung des Düsenabstandes (8) zum Strang (7) zum Beispiel beim Anschneiden auf den in Druck und in Menge gleichmäßigen Hochdrucksauerstoffstrom zwischen dem Sauerstoff-Regelventil (3) und dem Massenstromventil (4) zur Versorgung des Schneidbrenners (5) und seiner Trenndüse (6).
3) einem Hochdrucksauerstoff-Schneidbrenner (5) für die unverwechselbare Aufnahme einer für einen bestimmten Arbeitsdruck vorgesehenen Hochdrucksauerstoff-Trenndüse (6).
4) einer Hochdrucksauerstoff-Trenndüse (6), berechnet, konstruiert, durch Versuche angepaßt und genauestens gefertigt für einen bestimmten Arbeitsdruck , nur in einen eigens für sie hergestellten Hochdrucksauerstoff-Schneidbrenner (5) passend.
Es wird darauf hingewiesen, daß die Hochdrucksauerstoff-Trenndüsen (6) kurze Blockdüsen gemäß EP-A-0 097 883 sind, bei denen die Strömungsverluste des Schneidsauerstoffs im Schneidkanal (10) durch dessen besondere Kürze besonders gering sind.
Mit vorstehend beschriebenem System wurden unter Berücksichtigung vorgenannter Betriebsvoraussetzungen beispielsweise folgende im Vergleich zu sehende Schneidergebnisse erzielt, wozu die wesentlichen Maße der dazu festgelegten Düsengeometrie, nämlich engster Düsenquerschnitt DE, Düsenaustrittsquerschnitt DA und Öffnungswinkel α zwischen DE und DA angegeben sind.

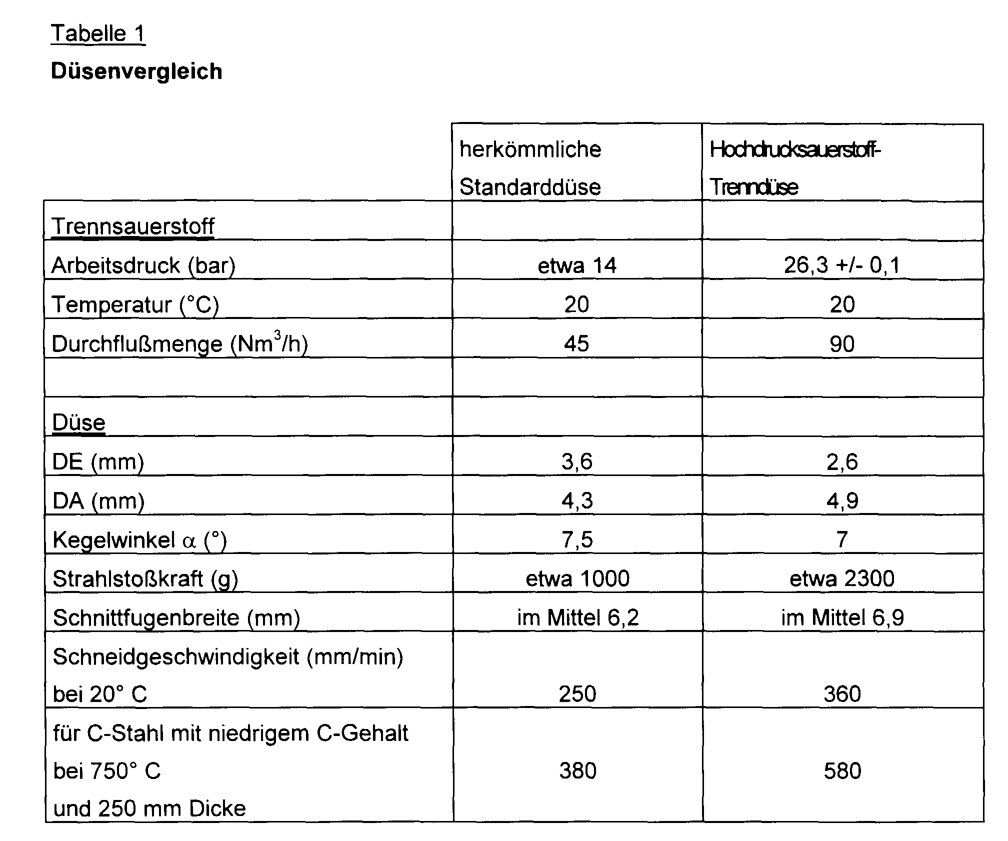

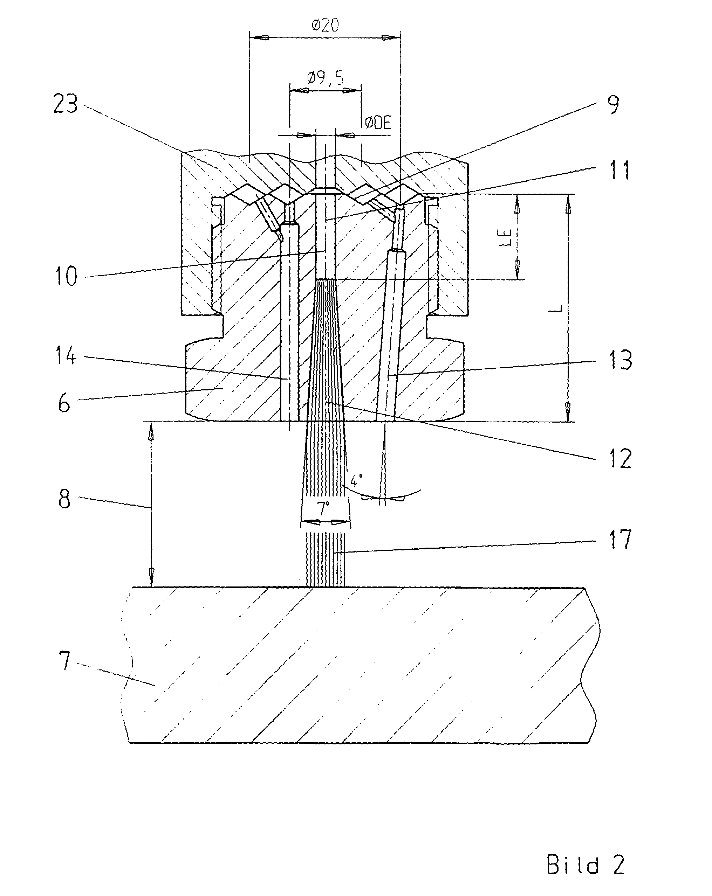

In Bild 2 ist die Standard-Trenndüse (6) als Blockdüse ähnlich den Schnellschneiddüsen in EP 0097883, die ja für den Betrieb mit Drücken von 10 bis 15 bar entwickelt wurden, dargestellt. Im Unterschied zu diesen jedoch wurde die Dichtfläche der Trenndüse (6) zur entsprechenden Dichtfläche des Schneidbrenners (5) hin nicht als mit Ringkanälen und flachen Dichtringen (30) davor, danach und dazwischen versehene flache Dichtfläche ausgeführt, sondern als eine neuartige Dichtfläche mit Sägezahn-Ringkanälen (9). Wegen der höheren Arbeitsdrücke und einer dafür erforderlichen, besseren Dichtung werden die einzelnen gasführenden Ringkanäle als kegelige, in die der Dichtfläche des Schneidbrenners (5) passende, geringfügig hineingeschobene Ringe ausgeführt, was im Querschnitt wie Zähne einer Säge aussieht. Solche ineinander durch Schrauben zusammengepreßte Kegelflächen an Schneidbrenner (5) und Trenndüse (6) können mit weniger Kraft zu einem noch besseren Dichtverhalten gebracht werden als andere direkte metallische Dichtungen.

Diese Trenndüse (6) ist aufgrund eines sicher verfügbaren Arbeitsdruckes genau berechnet worden und zwar für eine Strahlstoßkraft von mindestens 1000 g bei vergleichbarem Durchmesser der Schneidstrahlen (17). Nach der Festlegung des Schneidkanals (10) mit Eintrittsteil (11) bestimmten Durchmessers und bestimmter Länge und mit Austrittsteil (12) bestimmter Abmessungen einer Kegelbohrung, alle wie in obiger Tabelle beispielsweise aufgeführt, mußte nun der Teilkreisdurchmesser der an sich bekannten Heizflammenbohrungen (13, 14) und ihre Neigungswinkel zum Schneidstrahl (17) hin empirisch festgelegt werden. Dabei muß eine möglichst große Wärmeerzeugung in nächster Nähe um den Schneidstrahl (17) herum sichergestellt werden, ohne daß der Schneidstrahl an sich gestört wird.

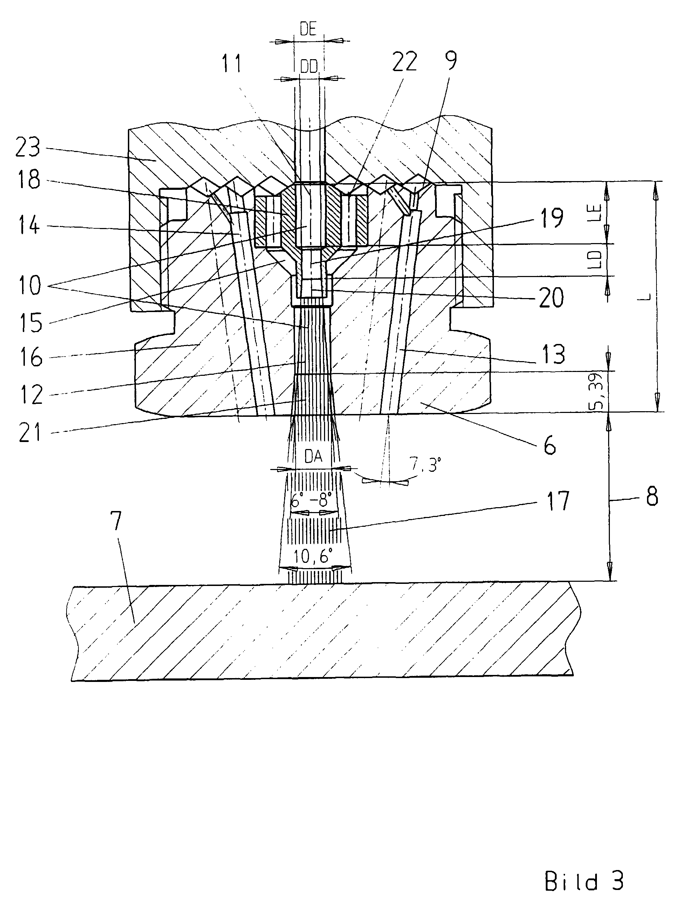

In Bild 3 wird eine weiterentwickelte Trenndüse (6) gezeigt, die, wie im Patentanspruch 1 beschrieben, einen Einsatz besitzt, der Strahlteil (18) genannt ist und hilft einen doppelten Schneidstrahl (17) mit gemeinsamer Mittelachse zu erzeugen. Dieser doppelte Schneidstrahl (17) hat einen Kernstrahl aus Sauerstoff höheren Druckes und einen schon in der Trenndüse (6) an diesen angelegten Ringstrahl aus Sauerstoff niedrigeren Druckes, der den Kern des Schneidstrahles (17) noch in der Trenndüse (6) gegen Reibung und damit Verwirbelung beziehungsweise Verluste schützt.
Damit wird eine bessere Schnittfläche möglich, allerdings wird dadurch auch die höchstmögliche Schneidgeschwindigkeit geringfügig kleiner und der Arbeitsdruck muß bei der Auslegung etwas höher festgelegt werden. Erfindungsgemäß besteht diese Trenndüse (6) aus einem Heizteil (16), der die empirisch angepaßten äußeren (13) und inneren (14) Heizflammenkanäle bekannter Heizleistungen und den Injektorraum (15) mit dem von da aus gehenden Austrittsteil (12) des Schneidkanals (10) mit nachfolgendem Nachaustrittsteil (21), der als Kegelstumpf von 10° bis 11° ausgehend vom Durchmesser DA des Austrittsteils (12).
In den mit dem Strahlteil (18) zusammen den Injektorraum (15) bildenden zylindrischen und anschließend kegeligen Hohlraum ist dieser Strahlteil (18) nicht austauschbar eingesetzt. Er hat neben den in den kegeligen Teil des Injektorraumes (15) mündenden 12 Dosierbohrungen (22) einen Teil des gesamten Schneidkanals (10), bestehend aus einem Eintrittsteil (11) mit einem Eintrittsdurchmesser DE mit anschließendem Vordüsenteil (19) mit dem Durchmesser DD und mit einem kegeligen Voraustrittsteil (20), der mit einem Winkel von 6° bis 8° in den Injektorraum (15) und von da in den Austrittsteil (12) des gesamten Schneidkanals (10) im Heizteil (16) mündet.

Durch den mittels der Dosierbohrungen (22) des Strahlteils (18) in den Injektorraum (15) geleiteten Schneidsauerstoff mit niedrigem Druck wird vom Schneidsauerstoff mit hohem Druck, der durch den Schneidkanal (10) des Strahlteils (18) strömt, ein Doppelstrahl mit außen weichem Ringstrahl und innen hartem Kernstrahl gebildet. Der direkt am Kernstrahl anliegende Ringstrahl verhindert eine starke Wirbelbildung an der Wandung des Schneidkanals (10) im und am Austrittsbereich der Trenndüse (6), dadurch enstehende, beträchtliche Energieverluste und verhindert dazu die Verschmutzung des Kern-Schneidsauerstoffs durch die Heizflammengase.

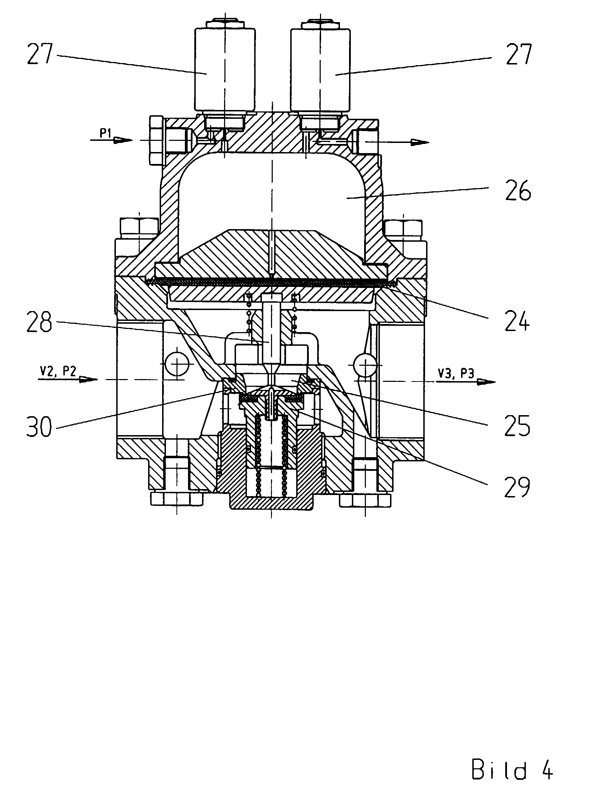

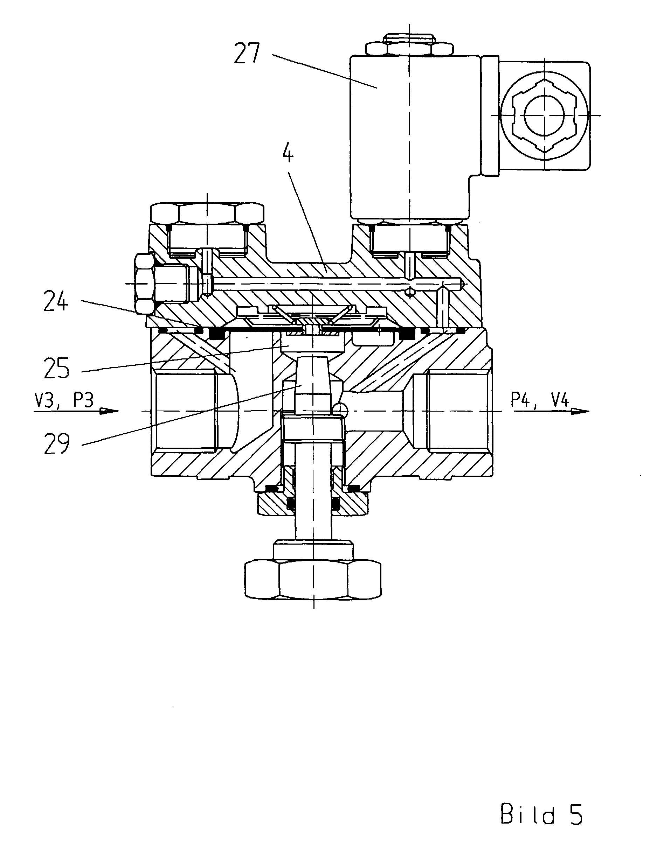

In Bild 4 ist das Sauerstoff-Regelventil (3) dargestellt, das mit hoher Einstell- und Steuergenauigkeit den benötigten Arbeitsdruck an Schneidsauerstoff für die Trenndüse (6) erzeugt.
Eine Membrane (24) bewirkt das Öffnen einer Ventilöffnung (25) durch einen Gasdruck in der Kuppel (26), der durch ein Magnetventil (27) von einem Versorgungsdruck P1 ausgehend gesteuert wird. Außer dem Magnetventil (27) zum Einstellen des besten Arbeitsdruckes P3 bei einer Durchflußmenge V3 ausgehend von einem Versorgungsdruck P2 und einer Zuflußmenge V2, gibt es noch ein Magnetventil (27) zum steuernden Ablassen aus der Kuppel (26) oder zum völligen Schließen des Sauerstoff-Regelventils (3). Der Druck des Gases in der Kuppel (26) wirkt über eine federbelastete Ventilnadel (28) auf ein ebenfalls federbelastetes Hahnstück (29), das mit einer Dichtkante gegen einen Dichtring (30) abschließt.
Ein Massenstromventil (4) ist in Bild 5 gezeigt. Dieses hat die Aufgabe das Ergebnis aus Druck P4 x Durchflußmenge V4, also die letztendlich der Trenndüse (6) zufließende Gasmasse möglichst gleich zu halten und damit das thermo-chemische Verhalten des Schneidstrahles (17) in Energie und chemischer Reaktion. Verändernd wird sonst der von einem Massenstromventil (4) nicht gesteuerte Schneidstrahl (17), der aus der Trenndüse austritt, von einem sich verändernden Düsenabstand (8), Düsenverschmutzung oder - verschleiß und anderen betrieblichen Umständen nachteilig beeinflußt. Wird durch einen solchen äußeren Einfluß der vorgegebene Schneidstrahl (17) in seiner Ausströmung behindert, beziehungsweise wird diese erleichtert, so wird dieses vom Sauerstoff-Regelventil (3) durch die entstehende Veränderung des Nachdruckes an demselben ausgelöst in eine Erhöhung oder in eine Erniedrigung des Nachdruckes umgesetzt. Allerdings leider immer unter falschem Vorzeichen. Bei Behinderung des Ausströmens aus der Trenndüse (6) ensteht vor der Trenndüse (6) ein Staudruck, der das Sauerstoff-Regelventil (3) zur Druckminderung veranlaßt, obwohl ein nun höherer Druck die Behinderung überwinden und die Ausströmung gleichhalten hülfe.

Eine solche unerwünschte Wirkung ist auch umgekehrt der Fall, wenn die Ausströmung erleichtert wird. Um wenigstens in Anfangsbereichen solche Fehlwirk zu vermeiden, wird hier das Massenstromventil (4) eingesetzt.
Beim in Bild 5 gezeigten Massenstromventil (4) fließt bei geöffnetem Magnetventil (27) der Schneidsauerstoff unter der Membrane (24) durch eine Ventilöffnung (25), die durch das konische Ende einer Ventilnadel (28) verbrauchsgerecht eingestellt wird, zur Trenndüse (6).
Ändert sich der Vordruck an der Trenndüse (6), dann muß dieser nun gegen die beschleunigte Strömung an der engen Ventilöffnung (25) und unter der Membrane (24) über den Rand der Ventilöffnung (25) hinweg kaskadenförmig zurück wirken. Dieses ist bei den anfangs geringen Druckunterschieden kaum möglich, und eine durch das Sauerstoff-Regelventil (3) verstärkte Veränderung des Ausströmens findet nicht oder kaum statt. So kann das Betriebsverhalten beim Schneiden über längere Zeit gleich gehalten, Betriebsstörungen und Nachstellvorgänge zur unrechten Zeit vermieden werden.

### Legende

- 1: Tank
- 2: Verdampfer
- 3: Sauerstoff-Regelventil
- 4: Massenstromventil
- 5: Schneidbrenner
- 6: Trenndüse
- 7: Strang
- 8: Düsenabstand
- 9: Sägezahn-Ringkanal
- 10: Schneidkanal
- 11: Eintrittsteil
- 12: Austrittsteil
- 13: äußerer Heizflammenkanal
- 14: innerer Heizflammenkanal
- 15: Injektorraum
- 16: Heizteil
- 17: Schneidstrahl
- 18: Strahlteil
- 19: Vordüsenteil
- 20: Voraustrittsteil
- 21: Nachaustrittsteil
- 22: Dosierbohrungen
- 23: Düsenaufnahme
- 24: Membrane
- 25: Ventilöffnung
- 26: Kuppel
- 27: Magnetventil
- 28: Ventilnadel
- 29: Hahnstück
- 30: Dichtring

## Patentansprüche

1. Stahlstranggießanlage mit nachfolgend angeordneter Querteil- und Längsteileinrichtung zum Sauerstoffbrennschneiden von heißen und kalten Strängen (7), wobei eine Trenndüse (6) mit einem Arbeitsdruck im Bereich von 20 bis 36 bar für einen in Grenzen von +/- 0,1 bar festgelegten, bestimmten Arbeitsdruck genauestens ausgelegt, gefertigt und mit Sägezahn-Ringkanälen (9) an der Dichtfläche im Schneidbrenner (5) versehen ist und zur genau eingestellten und unveränderten Versorgung ein eigenes, Schwankungen ausgleichendes Sauerstoff-Regelventil (3) und ein Düsenrückwirkungen durch veränderlichen Düsenabstand (8) und Düsenquerschnitte unterdrückendes Massenstromventil (4) oder eine Kombination beider Geräte vorgeschaltet sind, und wobei die Trenndüse (6) aus einem eine notwendige Heizflamme durch Vermischen von Heizgas und Heizsauerstoff erzeugenden Heizteil (16) und einem den Schneidsauerstoffdruck in Geschwindigkeit zur Strahlbildung umwandelnden Strahlteil (18) besteht, der injektorartig in einen mit Sauerstoff niedrigeren Druckes versorgten zwischen dem die Heizflamme erzeugenden Heizteil (16) und dem den Schneidstrahl (17) vorbildenden Strahlteil (18) gebildeten, Injektorraum (15) hineinragt und diesen Sauerstoff beschleunigend mitreißt.

2. Stahlstranggießanlage mit nachfolgend angeordneter Querteil- und Längsteileinrichtung zum Sauerstoffbrennschneiden von heißen und kalten Strängen (7) nach Anspruch 1 dadurch gekennzeichnet, daß die für die Aufnahme von Heizgas, Heizsauerstoff und Schneidsauerstoff aus dem Schneidbrenner (5) ausgeführte Anschlußfläche der Trenndüse (6) mit im Querschnitt sägezahnähnlichen, Sägezahn-Ringkanälen (9) versehen ist, die mit der ebenfalls mit entsprechenden Sägezahn- Ringkanälen (9) ausgestatteten Anschlußfläche im Schneidbrenner (5) kanalweise kegelig dichtend zusammenpaßt.

3. Stahlstrangießanlage mit nachfolgend angeordneter Querteil- und Längsteileinrichtung zum Sauerstoffbrennschneiden von kalten und heißen Strängen (7) nach einem der Ansprüche 1 und 2 , dadurch gekennzeichnet, daß bei einer Trenndüse (6) einem bestimmten Schneidsauerstoffdruck ein bestimmter Schneidkanal (10) zugeordnet ist, bestehend aus einem Eintrittsteil (11) mit einem Eintrittsdurchmesser DE ist gleich oder kleiner 2,6 mm, mit einer Länge von LE gleich 10 mm oder größer und einem Austrittsteil (12) mit einem Austrittskegel gleich 6° oder größer am Eintrittsdurchmesser 2,6 mm oder ähnlich beginnend und daß die ganze Trenndüse (6) nur 25 bis 45 mm, vorteilhaft 30 mm lang ist.
Die angepaßten 14 äußeren Heizkanäle (14) liegen auf dem Teilkreis von 20 mm Durchmesser oder ähnlich und sind um 4° zur Mittelachse nach innen gerichtet, die angepaßten 7 inneren Heizflammenkanäle (13) mit dem Teilkreis von 9,5 mm Durchmesser verlaufen gleichgerichtet zur Mittelachse der Trenndüse ( 6 ).

4. Stahlstranggießanlage mit nachfolgend angeordneter Querteil- und Längsteileinrichtung zum Sauerstoffbrennschneiden von kalten und heißen Strängen (7) nach einem der Ansprüche 1 bis 3, wobei der Strahlteil zur Sicherheit unlösbar mit dem umgebenden Heizteil (16) verbunden ist.

5. Stahlstranggießanlage mit nachfolgend angeordneter Querteil- und Längsteileinrichtung zum Sauerstoffbrennschneiden von kalten und heißen Strängen (7) nach einem der Ansprüche 1 bis 4, dadurch gekennzeichnet, daß bei einer Trenndüse (6) mit einem bestimmten Schneidsauerstoffdruck ein bestimmter Schneidkanal (10) zugeordnet ist, bestehend aus einer in einen Strahlteil (18) eingearbeiteten Eintrittsbohrung (11) mit einem Eintrittsdurchmesser DE ist gleich oder größer 2,6 mm, und mit einer Länge von LE gleich 6 bis 10 mm, einem Vordüsenteil (19) mit einem Düsendurchmesser DD kleiner gleich 2,6 mm und mit einer Länge LD von 2 bis 6 mm, einem Voraustrittsteil (20) mit einem Austrittsdurchmesser DA, der sich zum Ende des Strahlteiles (18) hin mit dem Kegelwinkel von 6° - 8° aufweitet und daß der ganze Strahlteil (18) in einem Heizteil (16) von 25 bis 40 mm Länge sitzt und zwischen Heizteil (16) und Strahlteil (18) ein 2 bis 4 mm langer, kegelig nach innen gerichteter Injektorraum (15 ) von 8° bis 12° auf 5,5 zu 4 mm besteht, der sich dann zylindrisch um 5 bis 7 mm verlängert, und durch folgende Merkmale :
in der Trenndüse (6) verbleibt ein Abstand von 0,75 bis 1,5 mm Länge zwischen Ende Strahlteil (18) bis zum Beginn des Austrittsteils (12) von 9,5 bis 14,5 mm Länge und dem Durchmesser DA von 3 bis 6 mm, dem ein kegeliger Nachaustrittsteil (21) mit einem Austrittswinkel von 8° bis 12° folgt; Die 12 Dosierbohrungen (22) von 1,5 bis 2 mm Durchmesser im Strahlteil (18) für die Versorgung des Injektorraumes (15) mit Sauerstoff liegen auf einem Teilkreis von 10 mm Durchmesser, sind 5 bis 10 mm lang und verlaufen mit der Düsenachse gleichgerichtet; Die angepaßten 14-16 äußeren Heizflammenkanäle (13) liegen auf einem Teilkreis von 18-22 mm und sind um 3° bis 6° zur Mittelachse nach innen gerichtet, die 6-8 angepaßten inneren Heizflammenkanäle (14) mit dem Teilkreisdurchmesser von 9 bis 11 mm verlaufen gerade zur Mittelachse der Trenndüse (6).

6. Stahlstranggießanlage mit nachfolgend angeordneter Quer- und Längsteileinrichtung zum Sauerstoffbrennschneiden von kalten und heißen Strängen (7) nach einem der Ansprüche 1 bis 5, dadurch gekennzeichnet, daß der den Schneidstrahl (17) vorformende Strahlteil (18) ein rohrartiger, innen oder außen zylindrisch oder kegelig geformter Drehkörper ist, dessen Wandung von Bohrungen oder Schlitzen durchbrochen ist, oder der aus porösem, gasdurchlässigem Material besteht, so daß durch die Wandreibung verlangsamte und somit druckerhöhte Strahlteile (18) durch die Wandung des Strahlteiles (18) hindurch seitlich zum Schneidstrahl (17) abfließen oder abgesaugt werden.

7. Stahlstranggießanlage mit nachfolgend angeordneter Querteil- und Längsteileinrichtung zum Sauerstoffbrennschneiden von kalten und heißen Strängen (7) nach einem der Ansprüche 1 bis 6, dadurch gekennzeichnet, daß jede Trenndüse (6) mit dem bestimmten, ihr zugeordneten Arbeitsdruck des Schneidsauerstoffs mit einem eigenen, unverwechselbaren, durch Art, Gewindedurchmesser und Gewindesteigung bestimmten Anschluß für die ihr entsprechende Düsenaufnahme (23) des Sauerstoff-Schneidbrenners (5) ausgeführt ist.

8. Stahlstranggießanlage mit nachfolgend angeordneter Querteil- und Längsteileinrichtung zum Sauerstoffbrennschneiden von kalten und heißen Strängen (7) nach einem der Ansprüche 1 bis 7 , dadurch gekennzeichnet, daß die für eine mit genauer Versorgung mit ständig gleicher Menge und gleichem Druck arbeitende Trenndüse (6) durch ein Sauerstoff-Regelventil (3) versorgt wird, das Eingangsmenge und Eingangsdruck mittels fest eingestelltem Gasdruck auf einer Membrane (24), die die Ventilöffnung (25) je nach Vordruck und für die Trenndüse (6) vorgesehenen Arbeitsdruck oder Menge öffnet oder schließt und somit begrenzte Vordruckschwankungen ausgleichen kann.

9. Stahlstranggießanlage mit nachfolgend angeordneter Querteil- und Längsteileinrichtung zum Sauerstoffbrennschneiden von kalten und heißen Strängen (7) nach einem der Ansprüche 1 bis 8, dadurch gekennzeichnet, daß die Rückwirkungen des Schneidsauerstoffstrahls auf die Gleichmäßigkeit in Druck und Menge, bewirkt durch veränderten Düsenabstand (8) zur Oberfläche des Stranges (7) oder durch Veränderung der Abmessungen der Trenndüse (6) durch Wärme oder Verschleiß in Grenzen durch ein Massenstromventil (4) unterdrückt werden, indem zwischen diesem und der Trenndüse (6) auftretende kleinere Druck- und Mengenveränderungen nur begrenzt an ein Sauerstoff-Regelventil (3) weitergegeben werden.

10. Stahlstranggießanlage mit nachfolgend angeordneter Querteil- and Längsteileinrichtung zum Sauerstoffbrennschneiden von kalten und heißen Strängen (7) nach einem der Ansprüche 1 bis 9 , dadurch gekennzeichnet, daß das Sauerstoff-Regelventil (3) und das Massenstromventil (4) in eine Einheit zusammengefaßt und so nahe wie möglich vor oder direkt an dem Schneidbrenner (5) angebracht sind.

## Claims

1. Continuous steel casting plant with following cross-cutting and slitting equipment for oxy-torch cutting of hot and cold strands (7) whereby a separation nozzle (6) with a working pressure of around 20 to 36 bar, precisely designed for a set, specific working pressure with tolerances of +/- 0,1 bar is manufactured and equipped with saw tooth-guide channels (9) at the sealing surface in the cutting torch (5). A specific oxygen-regulating valve (3) balancing fluctuations to ensure exactly set and constant supply, and a mass-flow valve (4) suppressing nozzle back effects created by changing nozzle distance (8) and nozzle sections or a combination of both devices are installed in front of the separation nozzle (6) and whereby the separation nozzle (6) consists of a heating part (16) producing a necessary heating flame by mixing heating gas and heating oxygen, and a jet part (18) converting cutting oxygen pressure into speed for formation of a jet which extends injector-like into the injector area (15), which is created between the heating part (16) producing the heating flame and the cutting jet (17) generated before the jet part (18) and supplied with low pressure oxygen which is accelerated by the jet part (18).

2. Continuous steel casting plant with following cross-cutting and slitting equipment for oxy-torch cutting of hot and cold strands (7) as per claim 1 defined by the separation nozzle's (6) connection surface for heating gas, heating oxygen and cutting oxygen emerging from the cutting torch (5) is designed with saw tooth-guide channels (9), looking like saw teeth in its cross section. The separation nozzle's (6) connection surface fits channel by channel into the conically sealing of the cutting torch's (5) connection surface which is also designed with corresponding saw tooth-guide channels (9).

3. Continuous steel casting plant with following cross-cutting and slitting equipment for oxy-torch cutting of hot and cold strands (7) as per claim 1 and 2 defined by that a certain cutting oxygen pressure is assigned to a certain cutting channel (10) in the separation nozzle (6). This separation nozzle (6) consists of an inlet (11), with inlet diameter DE less than or equal to 2.6 mm and length LE greater than or equal to 10 mm, and an outlet (12), with outlet taper greater than or equal to 6° at inlet diameter 2.6 mm or starting similar. The whole separation nozzle (6) is only 25 - 45 mm, most favorably 30 mm long.
The adjusted 14 outer heating channels (14) with a pitch circle of 20 mm diameter or similar are directed inwards by 4° towards the central axis. The adjusted 7 inner heating channels (13) with a pitch circle of 9.5 mm diameter run unidirected towards the central axis of the separation nozzle (6).

4. Continuous steel casting plant with following cross-cutting and slitting equipment for oxy-torch cutting of hot and cold strands (7) as per one of the claims 1 to 3 whereby the jet part (18) is solidly connected with the surrounding heating part (16) for safety reasons.

5. Continuous steel casting plant with following cross-cutting and slitting equipment for oxy-torch cutting of hot and cold strands (7) as per one of the claims 1 to 4 defined by a certain cutting channel (10) which is assigned to a separation nozzle (6) with a certain cutting oxygen pressure. The cutting channel (10) consists of an inlet bore (11), with inlet diameter DE greater than or equal to 2.6 mm and length LE equal to 6 - 10 mm, built into the jet part (18), a pre-nozzle part (19), with nozzle diameter DD less than or equal to 2.6 mm and length LD equal to 2 - 6 mm), and a pre-outlet (20) with outlet diameter DA extending towards the end of the jet part (18) with the taper angle of 6° - 8°. The whole jet part (18) is located inside a heating part (16) which is 25 - 40 mm long. An injector area (15) conically directed towards the inside with 8° to 12° from 5.5 to 4 mm diameter, extending cylindrically by 5 to 7 mm, exists between heating part (16) and jet part (18) and by the following characteristics:
Inside the separation nozzle (6) a distance of 0.75 to 1.5 mm length between end of jet part (18) and beginning of outlet (12), with length equal to to 9.5 - 14.5 mm and diameter DA equal to 3 - 6 mm, remains. A conical post-outlet (21) with an outlet angle of 8° - 12° follows the outlet (12); The 12 feed bores (22) of 1.5 - 2 mm diameter in the jet part (18) for supply into the injector area (15) with oxygen have a pitch circle of 10 mm diameter, are 5 - 10 mm long, and run unidirectionial with the nozzle axis; The adjusted 14 - 16 outer heating flame channels (13) have a pitch circle of 18 - 22 mm and are directed inwards 3° - 6° towards the central axis. The adjusted 6 - 8 inner heating flame channels (14) with a pitch circle diameter of 9 - 11 mm run straight with the central axis of the separation nozzle (6).

6. Continuous steel casting plant with following cross-cutting and slitting equipment for oxy-torch cutting of hot and cold strands (7) as per one of the claims 1 to 5 defined by a jet part (18) pre-forming the cutting jet (17) which is a tube-like, inside or outside conically formed rotating body. The wall of this rotating body is perforated with bores or slots or consists of porous, gas permeable material so that the jet parts (18) which are slowed down by the wall friction and therefore are pressure increased, flow off or are pumped out through the jet part's (18) wall laterally towards the cutting jet (17).

7. Continuous steel casting plant with following cross-cutting and slitting equipment for oxy-torch cutting of hot and cold strands (7) as per one of the claims 1 to 6 defined by that every separation nozzle (6) with a certain, individually assigned working pressure of the cutting oxygen is designed with a specific, distinctive connection determined according to type, thread diameter and thread pitch for its corresponding nozzle holder (23) of the cutting torch (5).

8. Continuous steel casting plant with following cross-cutting and slitting equipment for oxy-torch cutting of hot and cold strands (7) as per one of the claims 1 to 7 defined by that the separation nozzle (6) working with exact supply of constantly same quantity and same pressure is supplied by an oxygen-regulating valve (3). This oxygen-regulating valve (3) balances the inlet quantity and supplies pressure by means of fix adjusted gas pressure on a membrane (24) which opens or closes the valve opening (15) according to pre-pressure and the separation nozzle's (6) working pressure or quantity and therefore is able to balance out limited pre-pressure fluctuations.

9. Continuous steel casting plant with following cross-cutting and slitting equipment for oxy-torch cutting of hot and cold strands (7) as per one of the claims 1 to 8 defined by that the nozzle back effects of the cutting oxygen jet on the steady pressure and quantity caused by changed nozzle distance (8) towards the surface of the strand (7) or by alteration of measures of the separation nozzle (6) by heat or wear, are suppressed by a mass-flow valve (4) to a certain extend. This is achieved by only forwarding the minor pressure and quantity alterations appearing between the mass-flow valve (4) and the separation nozzle (6) to an oxygen-regulating valve (3) only to a certain extend.

10. Continuous steel casting plant with following cross-cutting and slitting equipment for oxy-torch cutting of hot and cold strands (7) as per one of the claims 1 to 9 defined by that the oxygen-regulating valve (3) and the mass-flow valve (4) are combined in one unit and are located as close as possible to the front of the cutting torch (5) or directly at the cutting torch (5).

## Revendications

1. Installation de coulée continue avec dispositif d'oxycoupage situé en sortie pour la refente transversale ou longitudinale de brames d'acier chaudes ou froides, une buse de coupe (6) étant conçue et usinée au plus juste pour une pression donnée, fixée entre 20 et 36 bar et régulée à + ou - 0,1 bar et étant pourvue de canaux circulaires à profil en dents de scie (9) en tant que surface d'étanchéité avec le chalumeau d'oxycoupage (5), et une propre vanne de détente pour oxygène (3), nivelant les variations du réseau ou un régulateur de débit massique (4) compensant les contre-pressions occasionnées par les variations de la hauteur de buse ou de sa section de passage, ou bien encore une combinaison de ces deux dispositifs en garantit l'alimentation précise et stable et la buse de séparation (6) se composant d'une pièce de chauffe (16) produisant la flamme de chauffe nécessaire en mélangeant le gaz de chauffe et l'oxygène de chauffe, et d'un insert de coupe (18) transformant la pression d'oxygène en vitesse pour former le jet; cet insert, à la manière d'un injecteur, aliment en oxygène à plus basse pression une chambre d'injection, située entre la pièce de chauffe (16) qui produit la flamme de chauffe et l'insert de coupe (18) préparant le jet de coupe (17) et accélère fortement cet oxygène.

2. Installation de coulée continue avec dispositif d'oxycoupage situé en sortie pour la refente transversale ou longitudinale de brames d'acier chaudes ou froides, selon la revendication 1, caractérisé en ce que la surface de raccordement de la buse de séparation (6), çoncue pour la réception du gaz de chauffe, de l'oxygène de chauffe ainsi que de l'oxygène de coupe amenés par le chalumeau d'oxycoupage (5) est pourvue de canaux circulaires dont le profil est en dents de scie (9), la surface de raccordement du chalumeau d'oxycoupage (5) étant également pourvue de canaux circulaires en dents de scie (9) de façon que les deux surfaces s'adaptent l'une à l'autre selon une étanchéité conique.

3. Installation de coulée continue avec dispositif d'oxycoupage situé en sortie pour la refente transversale ou longitudinale de brames d'acier chaudes ou froides selon l'une des revendications 1 et 2 caractérisé en ce que pour une buse de coupe (6) donnée un canal de coupe (10) précis correspond à une pression d'oxygène de coupe précise, lequel canal est constitué d'une entrée (11) ayant un diamètre DE au plus égal à 2,6 mm, avec une longueur LE au moins égale à 10 mm et d'une sortie (12) avec un cône de tuyère de 6° ou plus avec un diamètre d'entrée égal à environ 2,6 mm, et que la buse de coupe (6) n'est longue que de 25 à 45 mm, de préférence 30 mm.
Les 14 canaux de chauffe extérieurs adaptés (14) sont regroupés sur un cercle de 20 mm environ de diamètre et sont dirigés vers le centre de la buse selon un angle de 4°, les 7 canaux de chauffe intérieurs adaptés (13) sont sur un cercle de 9,5 mm environ et sont orientés parallèlement à l'axe médian.

4. Installation de coulée continue avec dispositif d'oxycoupage situé en sortie pour la refente transversale ou longitudinale de brames d'acier chaudes ou froides selon l'une des revendications 1 à 3, l'insert de coupe (18) étant placé en force dans la pièce de chauffe et ne pouvant en être séparé pour satisfaire aux exigences de sécurité.

5. Installation de coulée continue avec dispositif d'oxycoupage situé en sortie pour la refente transversale ou longitudinale de brames d'acier chaudes ou froides selon l'une des revendications 1 à 4 caractérisé en ce que pour une buse de coupe (6) donnée un canal de coupe (10) précis correspond à une pression d'oxygène de coupe précise, lequel canal de coupe (10) est constitué d'un alésage d'entrée (11) percé dans l'insert de coupe (18) et ayant un diamètre d'entrée DE au plus égal à 2,6 mm et une longueur LE comprise entre 6 et 10 mm, d'une prébuse (19) avec un diamètre DD au plus égal à 2,6 mm et une longueur comprise entre 2 et 6 mm et d'une présortie (20) dont le diamètre de sortie DA s'élargit vers la fin de l'insert de coupe (18) selon un angle de cône entre 6 et 8°, que l'insert de coupe entier (18) est placé dans une pièce de chauffe d'une longueur comprise entre 25 et 40 mm et qu'une chambre d'injection (15) est ménagée entre la pièce de chauffe (16) et l'insert de coupe (18), laquelle chambre est longue de 2 à 4 mm, conique et dirigée vers le centre selon un angle de 8 à 12° sur 5,5 à 4 mm et qui se prolonge ensuite cylindriquement sur 5 à 7 mm et par les caractéristiques suivantes:
Dans la buse de séparation (6) reste une distance de 0,75 à 1,5 mm de longueur entre la fin de l'insert de coupe (18) et le début de la sortie de tuyère (12), laquelle sortie a une longueur de 9,5 à 14,5 mm et un diamètre DA de 3 à 6 mm et se termine par un tronçon conique (21) selon un angle de 8 à 12°;
Les 12 perçages de dosage (22) d'un diamètre de 1,5 à 2 mm ménagés dans l'insert de coupe servent à approvisionner la chambre d'injection (15) en oxygène, ils se trouvent sur un cercle d'un diamètre de 10 mm, ont une longueur de 5 à 10 mm et sont orientés parallèlement à l'axe de la buse; Les 14 à 16 canaux de chauffe adaptés extérieurs (13) se trouvent sur un cercle de 18 à 22 mm de diamètre et sont orientés vers l'intérieur selon un angle de 3° à 6° avec l'axe médian. Les 6 à 8 canaux de chauffe adaptés intérieurs (14) sont sur un cercle de 9 à 11 mm de diamètre et sont parallèles à l'axe médian.

6. Installation de coulée continue avec dispositif d'oxycoupage situé en sortie pour la refente transversale ou longitudinale de brames d'acier chaudes ou froides selon l'une des revendications 1 à 5 caractérisé en ce que l'insert de coupe qui préforme le jet de coupe (17) est un corps de rotation semblable à un tube cylindrique ou conique sur l'intérieur ou l'extérieur, et dont la paroi est soit pourvue de perçages ou de canelures soit constituée d'un matériau poreux et perméable aux gaz, permettant ainsi un écoulement d'une partie du jet de coupe (18) au travers de la paroi de l'insert de coupe (18) le long du jet de coupe (17), cette partie du jet de coupe étant ralentie à cause de la friction le long de la paroi de l'insert de coupe (18) est ainsi augmentée en pression.

7. Installation de coulée continue avec dispositif d'oxycoupage situé en sortie pour la refente transversale ou longitudinale de brames d'acier chaudes ou froides selon l'une des revendications 1 à 6 caractérisé en ce que toute buse de coupe (6) avec la pression d'oxygène de coupe donnée qu'en lui accorde est pourvue d'un raccord propre et unique de part sa réalisation, son diamètre de filet et son pas de filet de façon à convenir exactement et sans confusion possible avec le siège de buse (23) du chalumeau d'oxycoupage (5) correspondant.

8. Installation de coulée continue avec dispositif d'oxycoupage situé en sortie pour la refente transversale ou longitudinale de brames d'acier chaudes ou froides selon l'une des revendications 1 à 7 caractérisé en ce que la buse de coupe (6), dimensionnée pour une alimentation précise définie par un débit et une pression en permanence constants, est approvisionnée par une vanne de réglage d'oxygène (3) qui contrôle le débit et la pression d'entrée à l'aide d'une pression de gaz constante appliquée sur une membrane (24), laquelle libère ou obture l'ouverture de soupape (25) selon d'une part la pression d'admission et d'autre part la pression de service ou le débit prévus pour la buse de coupe (6), et peut ainsi niveler des variations limitées de la pression d'admission.

9. Installation de coulée continue avec dispositif d'oxycoupage situé en sortie pour la refente transversale ou longitudinale de brames d'acier chaudes ou froides selon l'une des revendications 1 à 8 caractérisé en ce que les répercussions du jet d'oxygène de coupe sur la constance de pression et de débit créées par des changements de la hauteur de buse (8) par rapport à la surface de la coulée (7) ou à cause de changements des dimensions de la buse de coupe (6) dûs à la chaleur ou à l'usure peuvent être compensées dans une certaine mesure à l'aide d'un régulateur de débit massique (4) qui ne transmet à une vanne de réglage d'oxygène (3) qu'une quantité restreinte des modifications de pression et de débit qui apparaissent entre la buse de coupe (6) et ce régulateur lui-même.

10. Installation de coulée continue avec dispositif d'oxycoupage situé en sortie pour la refente transversale ou longitudinale de brames d'acier chaudes ou froides selon l'une des revendications 1 à 9 caractérisé en ce que la vanne de réglage d'oxygène (3) et le régulateur de débit massique (4) forment une seule entité et sont placés aussi proche que possible en avant ou directement sur le chalumeau d'oxycoupage (5).
